# NOUVEAU FASCICULE DE BREVET EUROPEEN

(11) **EP 0 038 241 B2**
(45) Date de publication et mention de la décision concernant l'opposition: **08.06.1994**
(45) Mention de la délivrance du brevet: 28.11.1984
(21) Numéro de dépôt: 81400497.4
(22) Date de dépôt: 27.03.1981
(51) Int. Cl.: A01C 5/06

(54) **Procédé de mise en terre des graines pour les semis dits de précision et semoir mettant en oeuvre un tel procédé**
Verfahren zum Präzisionssäen und Sämaschine, die dieses Verfahren anwendet
Method of precision drilling seeds and seed drill applying this method

(30) Priorité: 31.03.1980 FR 8007189
(43) Date de publication de la demande: 21.10.1981
(73) Titulaire: Société SOGEFINA Société de Gestion Financière Armoricaine (Société Anonyme), F-75008 Paris (FR)
(72) Inventeur: Herriau, Paul, F-59400 Cambrai (FR)
(74) Mandataire: Dawidowicz, Armand

(56) Documents cités:
- CA-A- 973 007
- DE-A- 2 613 948
- DE-A- 2 632 257
- DE-A- 2 934 121
- DE-C- 169 213
- FR-A- 1 229 027
- FR-A- 2 094 536
- FR-A- 2 214 226
- SU-A- 254 240
- SU-A- 528 052
- SU-A- 609 501
- US-A- 3 412 908
- US-A- 3 636 897
- US-A- 4 074 638
- US-A- 4 074 830
- US-A- 4 091 964
- US-A- 4 387 656
- Proceedings of Fifth International Mechanisation of Field Experiments, Wageningen, 04/08/1980

## Description

La présente invention concerne un procédé de mise en terre des graines destiné principalement aux semis dits de précision au cours desquels on doit assurer une mise en place précise de la graine dans le sillon.

Actuellement, dans la plupart des semoirs mono- graines utilisés pour les semis de précision, soit la graine tombe par gravité dans le sillon à la sortie du dispositif de distribution, soit la graine est transportée par un courant de fluide dans un tube jusqu'au niveau et en arrière du soc traçant le sillon. Dans tous les cas, mais surtout dans le cas du transport pneumatique, la graine arrive dans le sillon avec une vitesse notable. Il y a donc risque de rebondissement et de roulement des graines, ce qui, malgré le fait que les distributeurs des semoirs de précision permettent d'assurer une assez bonne constance de l'écart entre les graines distribuées à la sortie du semoir, entraîne une dispersion importante des graines de part et d'autre de l'axe du sillon et des variations dans les écartements.

Or, pour obtenir des rendements élevés et faciliter les façons culturales ultérieures, il est nécessaire que les graines telles que les graines de betteraves, de maïs ou similaires soient semées selon une ligne parfaite et avec un écartement régulier.

On a proposé dans le brevet FR-A-1 229 027 d'ouvrir un sillon en avant de l'orifice de sortie du distributeur dirigé vers l'arrière, ce sillon formant à l'arrière du soc une paroi d'éboulement transversale qui progresse au fur et à mesure de l'avancement du soc et de projeter la graine dans l'angle que forme cette paroi avec le fond du sillon. Toutefois la paroi d'éboulement naturelle se trouve à une distance incontrôlée en arrière du soc. La graine n'est donc pas emprisonnée positivement dès sa sortie du distributeur.

On a proposé dans le document russe N° 609.501 de réaliser un semoir du type comportant pour chaque sillon un soc ouvrant le sillon, un canal de transport pneumatique des graines aboutissant au droit du sillon et une roue de plombage enfonçant les graines distribuées dans le fond du sillon. Ce brevet cherche à éviter un rebondissement de la graine en rapprochant le point où la graine touche le sol du point où elle est enfoncée dans le sol par la roue de plombage. Toutefois, du fait que la roue de plombage peut, selon ce brevet, s'enfoncer plus ou moins dans le sillon donc varier en hauteur par rapport au fond du sillon tracé par le soc, il est prévu que l'inclinaison sur l'horizontale de la partie terminale du tube de transport est modifiée pour que son axe soit toujours tangent à la périphérie de la roue de plombage. Il est évident que, dans un tel semoir, le sommet du dièdre formé entre le fond du sillon tracé par un soc fixe et la périphérie de la roue dont l'enfoncement dans le sol varie, va se déplacer vers la génératrice frontale de la roue lorsque l'enfoncement de la roue croit et l'axe de la partie terminale du tube de transport restant tangent à la roue, la graine va frapper le sol ou la périphérie de la roue et rebondir avant d'être pincée entre la périphérie de la roue et le fond du sillon.

La présente invention a donc pour but de remédier aux inconvénients ci-dessus en fournissant un procédé de mise en terre des graines utilisé principalement dans les semis de précision qui permet de supprimer la dispersion des graines autour du point de semis théorique.

La présente invention a pour objet un procédé de mise en terre des graines pour les semis dits de précision effectué avec des semoirs comportant pour chaque sillon un soc (4) ouvrant un sillon, un canal de transport pneumatique (6) des graines (G) se terminant dans la section du sillon (8) par une partie terminale inclinée vers l'arrière et une roue de plombage (1) enfonçant les graines distribuées dans le fond du sillon, la graine (G) étant, au sortir du canal de transport pneumatique (6) du semoir, projetée, sous l'effet combiné de sa vitesse acquise et du guidage par la partie terminale du canal de transport, en direction du dièdre que forme la surface périphérique inférieure avant de la roue de plombage (1) avec le fond du sillon (8), caractérisé en ce que le soc (4) est fixé sur le palier (5) portant l'axe de la roue de plombage (1) et en ce que la partie terminale du canal de transport pneumatique (6) est disposée de façon que la graine (G) soit projetée en direction du sommet (D) dudit dièdre et se prolonge jusqu'à proximité du fond du sillon comme du sommet du dièdre qu'il détermine.

La présente invention a également pour objet un semoir du type comportant pour chaque sillon un soc (4) ouvrant le sillon, un canal de transport pneumatique (6) des graines aboutissant au droit du sillon (8) et une roue de plombage (1) enfonçant les graines distribuées dans le sillon, l'extrémité du canal de transport pneumatique (6) des graines étant dirigée vers le dièdre formé entre la surface périphérique avant inférieure de la roue de plombage (1) et le fond du sillon (8) pour projeter la graine sous l'effet combiné de sa vitesse acquise et du guidage par la partie terminale du canal de transport en direction du sommet dudit dièdre, caractérisé en ce que le soc (4) est fixé sur le palier (5) portant l'axe (2) de la roue de plombage et en ce que la partie terminale du canal de transport pneumatique (6) est disposée de façon que son axe soit dirigé vers un point de la périphérie de la roue de plombage situé au voisinage immédiat de la génératrice inférieure de cette roue et est prolongée jusqu'à proximité du fond du sillon comme du sommet du dièdre qu'il détermine.

Selon un mode de réalisation préférentiel l'extrémité du canal de transport entoure la partie inférieure avant de la périphérie de la roue de plombage, la partie d'extrémité du canal de transport ayant une section en arc de cercle et la génératrice frontale de ce canal étant excentrée par rapport à la roue de plombage dont elle recoupe la périphérie au voisinage du sommet du dièdre.

Avec ce mode de réalisation préférentiel, la graine, de par sa vitesse, est plaquée contre le fond du canal et sa trajectoire est confondue avec la génératrice frontale, ce qui supprime les dispersions pouvant résulter de la variation de position de la trajectoire de la graine dans la section du canal de transport.

Selon une autre caractéristique de la présente invention et pour éviter que la graine ne soit déplacée dans le sol au moment où elle est enfoncée par la roue de plombage par suite de la vitesse de glissement de celle-ci, la roue de plombage est entrainée de manière que sa vitesse périphérique soit sensiblement égale à la vitesse d'avancement du semoir. De préférence la vitesse périphérique est supérieure de 1 à 2 % à la vitesse d'avancement du semoir.

D'autres caractéristiques et avantages de la présente invention apparaîtront à la lecture de la description d'un exemple de mise en oeuvre du procédé conforme à l'invention et d'un mode de réalisation préférentiel du dispositif de mise en terre du semoir, faite ci-après avec référence aux dessins ci-annexés dans lesquels :

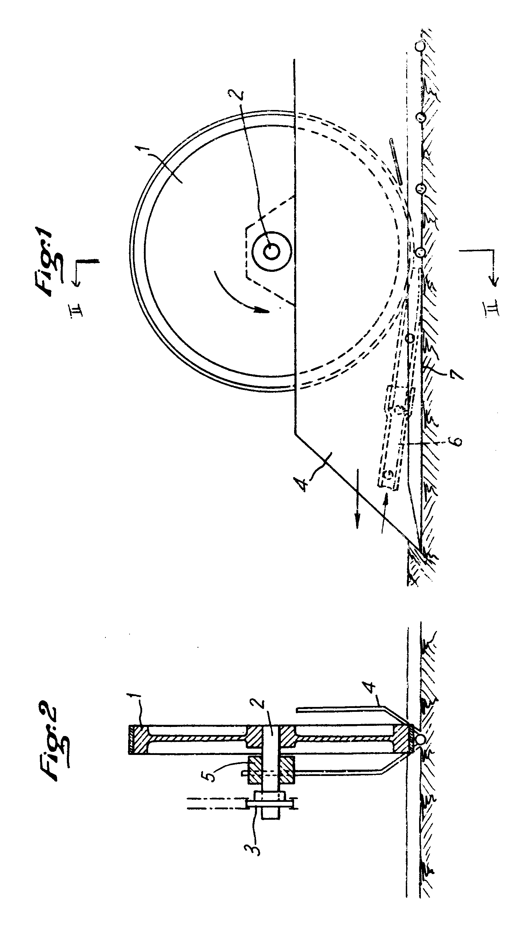

La figure 1 est une vue en élévation latérale schématique d'un dispositif d'amenée de la graine sous une roue de plombage conformément au procédé de la présente invention ;
la figure 2 est une vue en coupe par II-II de figure 1 ;
la figure 3 est une vue en élévation latérale d'un élément de mise en terre d'un semoir ;
la figure 4 est une vue de détail à plus grande échelle de la région de mise en terre de la graine du dispositif de figure 3, et
la figure 5 est une vue de détail en coupe par V-V de figure 3.

En se référant aux figures, la référence 1 désigne la roue de plombage. La roue de plombage 1 est montée à rotation sur un axe 2 qui est entraîné en rotation par un dispositif de transmission de tout type connu tel qu'un système à pignons et à chaîne 3 depuis une des roues du semoir ou la prise de force du tracteur de manière que la vitesse périphérique de la roue de plombage soit égale à la vitesse d'avancement du semoir. Un soc de traçage du sillon 4 est positionné en avant de la roue de plombage 1 et est fixé sur le palier 5 portant l'axe 2 de la roue de plombage. Conformément à la présente invention, l'axe de l'extrémité de sortie du tube 6 d'amenée des graines dans le sillon, du dispositif de distribution du semoir est sensiblement tangent à la roue de plombage et dirigé vers le sommet du dièdre formé entre la périphérie de la roue de plombage et le fond 7 du sillon. De ce fait, la graine ne rebondit pas sur le sol et elle est enfoncée directement dans le fond du sillon. On retrouve donc au niveau du sol la même régularité de répartition des graines en ce qui concerne notamment les écartements, que celle assurée par le dispositif distributeur du semoir.

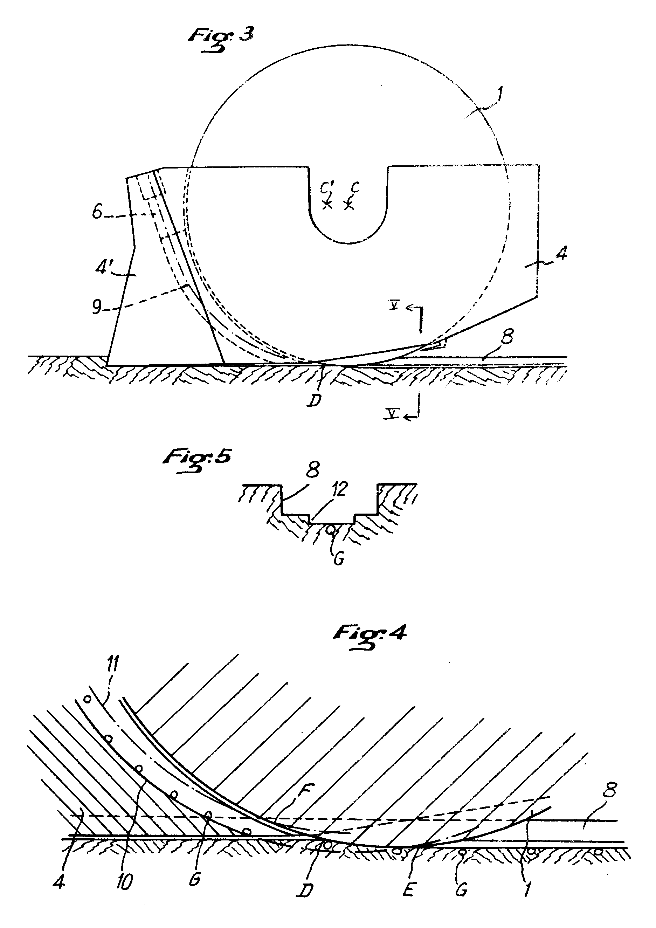

Dans le mode de réalisation des figures 3 et 4, la figure 4 étant une vue de détail en coupe par le plan central de la roue de plombage 1, les mêmes éléments sont désignés par les mêmes références. Le soc 4 est constitué par une plaque dans laquelle est entaillé un logement longitudinal pour la roue de plombage 1, la partie avant 4' présentant une face oblique de manière à creuser un sillon 8 de section rectangulaire. Le tube 6 se termine en oblique dans la partie supérieure avant du soc et il se prolonge par une gorge 9 de fond torique dont le centre est en C' en avant du centre C de la roue de plombage, cette gorge se raccordant avec le tube 6 par une partie rectiligne. Le sommet du dièdre entre le fond du sillon 6 et la surface périphérique de la roue 1 est désigné par la référence D. La génératrice 10 au fond de la gorge 9 recoupe le cercle périphérique de la roue de plombage 1 en E en aval mais à proximité immédiate du point D, tandis que le cercle directeur 11 de la gorge le recoupe en F en amont du point D. Avec cette disposition les graines G qui, sous l'effet de la force centrifuge et de la pesanteur, parcourent l'extrémité du trajet de guidage le long de la génératrice 10 sont projetées vers le point D et saisies entre le fond du sillon 8 et la roue de plombage qui les enfonce en même temps qu'elle tasse en 12 le fond du sillon.

## Revendications

1. Un procédé de mise en terre des graines pour les semis dits de précision effectué avec des semoirs comportant pour chaque sillon un soc (4) ouvrant un sillon, un canal de transport pneumatique (6) des graines (G) se terminant dans la section du sillon (8) par une partie terminale inclinée vers l'arrière et une roue de plombage (1) enfonçant les graines distribuées dans le fond du sillon, la graine (G) étant, au sortir du canal de transport pneumatique (6) du semoir, projetée, sous l'effet combiné de sa vitesse acquise et du guidage par la partie terminale du canal de transport, en direction du dièdre que forme la surface périphérique inférieure avant de la roue de plombage (1) avec le fond du sillon (8), caractérisé en ce que le soc (4) est fixé sur le palier (5) portant l'axe de la roue de plombage (1) et en ce que la partie terminale du canal de transport pneumatique (6) est disposée de façon que la graine (G) soit projetée en direction du sommet (D) dudit dièdre et se prolonge jusqu'à proximité du fond du sillon comme du sommet du dièdre qu'il détermine.

2. Un semoir du type comportant pour chaque sillon un soc (4) ouvrant le sillon, un canal de transport pneumatique (6) des graines aboutissant au droit du sillon (8) et une roue de plombage (1) enfonçant les graines distribuées dans le sillon, l'extrémité du canal de transport pneumatique (6) des graines étant dirigée vers le dièdre formé entre la surface périphérique avant inférieure de la roue de plombage (1) et le fond du sillon (8) pour projeter la graine sous l'effet combiné de sa vitesse acquise et du guidage par la partie terminale du canal de transport en direction du sommet dudit dièdre, caractérisé en ce que le soc (4) est fixé sur le palier (5) portant l'axe (2) de la roue de plombage et en ce que la partie terminale du canal de transport pneumatique (6) est disposée de façon que son axe soit dirigé vers un point de la périphérie de la roue de plombage situé au voisinage immédiat de la génératrice inférieure de cette roue et est prolongée jusqu'à proximité du fond du sillon comme du sommet du dièdre qu'il détermine.

3. Un semoir selon la revendication 2,
caractérisé en ce que l'extrémité du canal de transport (6) entoure la partie inférieure avant de la périphérie de la roue de plombage, la partie d'extrémité du canal de transport ayant une section en arc de cercle et la génératrice frontale (10) de ce canal étant excentrée par rapport à la roue de plombage dont elle recoupe la périphérie au voisinage du sommet (D) du dièdre.

4. Un semoir selon l'une quelconque des revendications 2 et 3,
caractérisé en ce que la roue de plombage (1) est entrainée de manière que sa vitesse périphérique soit sensiblement égale à la vitesse d'avancement du semoir.

5. Un semoir selon la revendication 4,
caractérisé en ce que la vitesse périphérique de la roue de plombage est supérieure de 1 à 2 % à la vitesse d'avancement du semoir.

## Patentansprüche

1. Verfahren zum Einbringen von Samenkorn in Präzisions-Samenbeete mit Hilfe einer Sämaschine, welche für eine jede Ackerfurche eine diese aufbrechende Pflugschar (4) aufweist, mit einem pneumatisch arbeitenden, das Samenkorn (G) transportierenden Kanal (8), welcher im Querschnitt der Ackerfurche (8) in einem nach hinten geneigten Endabschnitt endet und mit einem Rad (1), welches die verteilten Samenkörner in den Grund der Ackerfurche eindrückt, wodurch das Samenkorn (G) am Ausgang des pneumatischen Transportkanals (6) der Sämaschine unter dem kombinierten Einfluß seiner erreichten Geschwindigkeit und der Führung durch den Endteil des Transportkanals in Richtung derjenigen Winkelfläche geschleudert wird, welche von der unteren Umfangsfläche vor dem Rad (1) und dem Grund der Ackerfurche (8) gebildetwird, dadurch gekennzeichnet, daß die Pflugschar (4) auf dem die Achse (2) des Rades (1) tragenden Lagers (5) befestigt ist und daß der Ausgang des pneumatischen Transportkanals (6) so angeordnet ist, daß das Samenkorn (G) in Richtung des Gipfelpunktes (D) der Winkelfläche geschleudert wird und sich bis dicht auf den Grund der Ackerfurche sowie den Gipfelpunkt des von ihm bestimmten Flächenwinkels erstreckt.

2. Sämaschine, mit einer Pflugschar (4) für eine jeder Ackerfurche, welche von der Pflugschar (4) aufgerissen wird und mit einem pneumatisch arbeitenden Transportkanal (6) für das Samenkorn, welcher geradlinig mit der Ackerfurche (8) endet und mit einem Rad (1), welches die verteilten Samenkörner in die Ackerfurche äußere Ende des pneumatischen Transportkanals (6) für die Samenkörner in Richtung der Winkelfläche verläuft, die zwischen der vorderen Umfangsfläche unterhalb des Rades (1) und dem Grund der Ackerfurche (8) gebildet wird, um das Samenkorn unter dem kombinierten Einfluß seiner erreichten Geschwindigkeit und der Führung durch den Endteil des Transportkanals in Richtung auf den Gipfelpunkt der Winkelfläche zu schleudern, dadurch gekennzeichnet, daß die Pflugschar (4) auf dem die Achse (2) des Rades (1) tragenden Lager (5) befestigt ist, und daß der Ausgang des pneumatischen Transportkanals (6) so angeordnet ist, daß seine Achse auf einen Punkt des Umfangs des Rades gerichtet ist, der in unmittelbarer Nähe der unteren Erzeugenden dieses Rades liegt und bis nahe auf den Grund derAckerfurche sowie den Gipfelpunkt der Winkelfläche verlängert ist.

3. Sämaschine nach Anspruch 2, dadurch gekennzeichnet, daß das äußere Ende des Transportkanals (6) den unteren Teil vor der Umfangsfläche des Rades (1) umgibt, daß der einen kreisbogenförmigen Querschnitt aufweisende Transportkanal und die Erzeugende (10) an der Stirnseite dieses Kanals exzentrisch zum Rad (1) liegen und daß die Erzeugende (10) an der Stirnseite die Umfangsfläche in unmittelbarer Nähe des Gipfelpunktes (D) des Flächenwinkels wieder schneidet.

4. Sämaschine nach einem der Ansprüche 2 und 3, dadurch gekennzeichnet, daß das Rad (1) so gezogen wird, daß dessen Umfangsgeschwindigkeit gleich der Vorschubgeschwindigkeit der Sämaschine ist.

5. Sämaschine nach Anspruch 4, dadurch gekennzeichnet, daß die Umfangsgeschwindigkeit des Rades (1) größer ist als 1 bis 2 % der Vorschubgeschwindigkeit der Sämaschine.

## Claims

1. A process for setting seeds in precision sowing performed with seed drills comprising for each furrow a ploughshare (4) opening a furrow, a pneumatic transport channel (6) for seeds (G) ending in the cross-section of the furrow (8) in a rearwardly sloping end portion, and a rolling wheel (1) sinking the distributed seeds into the bottom of the furrow, the seed (G) being projected upon exit from the pneumatic transport channel (6) of the seed drill, under the combined effect of its impetus and guidance through the end part of the transport channel, in the direction of the dihedral formed by the lower forward peripheral surface of the rolling wheel (1) with the bottom of the furrow (8), characterised in that the ploughshare (4) is secured on the bearing (5) supporting the shaft of the rolling wheel (1), and the end part of the pneumatic transport channel (6) is arranged in such a manner that the seed (G) is projected in the direction of the apex (D) of the said dihedral, and extends as far as the vicinity of the bottom of the furrow and the apex of the dihedral defined thereby.

2. Aseed drill of the type comprising for each furrow a ploughshare (4) opening the furrow, a pneumatic transport channel (6) for the seed, ending at right angles to the furrow (8), and a rolling wheel (1) sinking the distributed seed into the furrow, the end of the pneumatic transport channel (6) for the seed being directed towards the dihedral formed between the lowerforward peripheral surface of the rolling wheel (1) and the bottom of the furrow (8), in order to project the seed in the direction of the apex of the said dihedral, under the combined effect of its impetus and guidance through the end part of the transport channel, characterised in that the ploughshare (4) is secured on the bearing (5) supporting the shaft (2) of the rolling wheel, and the end part of the pneumatic transport channel (6) is arranged in such a manner that its axis is directed towards a point of the periphery of the rolling wheel positioned in the immediate vicinity of the lowergen- eratrix of the said wheel and the said end part is extended as far as the vicinity of the bottom of the furrow and the apex of the dihedral defined thereby.

3. A seed drill in accordance with claim 2, characterised in that the end of the transport channel (6) surrounds the lower forward part of the periphery of the rolling wheel, the end part of the transport channel having a section shaped as an arc of a circle, and the front generatrix (10) of the said channel being eccentric in relation to the rolling wheel, and intersecting the periphery thereof in the vicinity of the apex (D) of the dihedral.

4. A seed drill in accordance with one of claims 2 and 3, characterised in that the rolling wheel (1) is driven in such a manner that its peripheral speed is substantially equal to the speed of advance of the seed drill.

5. A seed drill in accordance with claim 4, characterised in that the peripheral speed of the rolling wheel is greater by 1 to 2% than the speed of advance of the seed drill.
